# NEUE EUROPÄISCHE PATENTSCHRIFT

(11) **EP 1 440 223 B2**
(45) Veröffentlichungstag und Bekanntmachung des Hinweises auf die Entscheidung über den Einspruch: **08.11.2017**
(45) Hinweis auf die Patenterteilung: 29.11.2006
(21) Anmeldenummer: 02779805.7
(22) Anmeldetag: 30.10.2002
(51) Int. Cl.: F01K 23/10, F02C 7/18

(54) **GASTURBOGRUPPE**
GAS TURBINE GROUP
ENSEMBLE TURBINE A GAZ

(30) Priorität: 02.11.2001 CH 201501
(43) Veröffentlichungstag der Anmeldung: 28.07.2004
(73) Patentinhaber: Ansaldo Energia Switzerland AG, 5401 Baden (CH)
(72) Erfinder: DITTMANN, Rolf, Dr., CH-5415 Nussbaumen (CH); HOFFMANN, Jürgen, Dr., CH-5417 Untersiggenthal (CH); ROFKA, Stefan, CH-5415 Nussbaumen (CH); WÄLCHLI, René, CH-5013 Niedergösgen (CH)
(74) Vertreter: Bernotti, Andrea
(86) Internationale Anmeldenummer: PCT/IB2002/004522
(87) Internationale Veröffentlichungsnummer: WO 2003/038244

(56) Entgegenhaltungen:
- GB-A- 2 236 145

## Beschreibung

### Technisches Gebiet

Die Erfindung betrifft eine Gasturbogruppe gemäss dem Oberbegriff des Anspruchs 1.

### Stand der Technik

Parallel mit den Anforderungen an die Leistung und den Wirkungsgrad von Gasturbogruppen steigen die Anforderungen an die Kühlung der thermisch hochbelasteten Maschinenkomponenten einerseits und an die Auslegung des Kühlsystems andererseits. So muss eine ausreichende Kühlung im Interesse der Betriebssicherheit gewährleistet werden. Auf der anderen Seite ist der Kühlluftverbrauch soweit möglich einzuschränken. In der EP 62932 wurde vorgeschlagen, die Komponenten einer Gasturbine mit Dampf im geschlossenen Kreislauf zu kühlen. Dies erfordert eine vergleichsweise aufwändige Abdichtung der kühldampfführenden Komponenten. Gleichzeitig erfolgt eine rein konvektive Kühlung der Komponenten; auf die Wirkung eines Kühlfilms zur Verminderung des Wärmeeintrags wird hierbei verzichtet. In einer Anzahl weiterer Schriften, wie EP 684 369 oder der EP 995 891 und der dazu korrespondierenden US 6,161,385 wird vorgeschlagen, zur Kühlung von filmgekühlten Komponenten Dampf oder eine Dampf-Luft-Mischung zu verwenden. Solche Verfahren verbrauchen aber vergleichsweise grosse Dampfmengen, die hohe Anforderungen an die Reinheit und Überhitzung erfüllen müssen, damit es nicht zu einem Verstopfen der oft nur wenige Zehntel Millimeter grossen Filmkühlungsbohrungen kommt. Selbst wenn die erforderliche Dampfmenge und -qualität zur Verfügung steht, ist die Kühlung der Gasturbogruppe mit Dampf, anders als die mit Verdichter-Anzapfluft, nicht inhärent sicher. Siehe auch GB-A-2 236 145.

In der Folge weist die Kühlung mit Verdichter-Anzapfluft nach wie vor eine Reihe handfester Vorteile auf, wobei die entnommene Kühlluftmenge im Interesse des Arbeitsprozesses minimiert werden soll. In der Folge werden Kühlluftsysteme immer mehr an der Grenze ausgelegt, um im - aus kühltechnischer Sicht - ungünstigsten Betriebspunkt eine ausreichende Kühlung sicherzustellen, dabei aber nicht mehr Kühlluft zu verbrauchen als unbedingt notwendig. Das bedeutet einerseits eine hohe Empfindlichkeit auf Abweichungen des Arbeitsprozesses vom Auslegungspunkt der Kühlung, wenn beispielsweise aufgrund von Verschiebungen der Druckverhältnisse in einer Maschine die Kühlluftmengen variieren. Andererseits resultiert in einer Reihe anderer Betriebspunkte eine Überkühlung der thermisch belasteten Komponenten, wodurch die Leistungs- und Wirkungsgradpotentiale unerschlossen bleiben.

Es wurde daher verschiedentlich, beispielsweise in der EP 1 028 230, vorgeschlagen, im Kühlluftpfad variable Drosselstellen anzuordnen. DE 199 07 907 schlägt vor, durch verstellbare Verdichterlaufreihen, welche unmittelbar benachbart zu einer Anzapfstelle für Kühlluft angeordnet sind, unmittelbar den Vordruck der Kühlluft zu justieren. Wiewohl die Implementation dieser Massnahmen erfolgversprechend ist, sind sie natürlich sehr aufwändig und gerade für eine Nachrüstung bestehender Gasturbogruppe kaum geeignet. Daneben birgt der Einbau beweglicher Teile in das Kühlluftsystem die latente Gefahr einer Verstopfung der Kühlluftleitungen bei mechanischem Bauteilversagen.

Eine weitere relevante Frage stellt sich bei der Zufuhr von Kühlluft zu Baugruppen im Bereich der Brennkammer oder der Vorderseite der ersten Leitreihe einer Turbine. Während versucht wird, den Druckverlust des Arbeitsmediums zu minimieren, somit also den Druck am Turbineneintritt möglichst nahe am Verdichterenddruck zu halten, muss ein ausreichender Kühlluftmassenstrom enge Kühlluftkanäle und Kühlbohrungen passieren. Dies erfordert natürlich ein entsprechendes Druckgefälle über das Kühlluftsystem, wobei der Vordruck des Kühlluftsystems eben auch nicht höher als der Verdichterenddruck sein kann. Damit kann auch in dieser Hinsicht nur ein zweckmässiger, letztlich aber nicht vollkommen zufriedenstellender, Kompromiss zwischen den Leistungs- und Wirkungsgraddaten einer Gasturbogruppe einerseits und der Sicherstellung einer hinreichenden Kühlung getroffen werden.

JP 11 182263 und EP 1 128 039 schlagen vor, Zusatzverdichter im Kühlluftpfad einer Gasturbine anzuordnen. Dergestalt wird der Totaldruck der Kühlluft über den vom Verdichter bereitgestellten Druck angehoben. Anzumerken ist hierzu, dass die Anordnung aktiver und beweglicher Komponenten im Hauptströmungsweg der Kühlluft immer mit einem gewissen Risiko verbunden ist, bei einem Versagen der aktiven Komponenten die Funktion des Kühlsystems insgesamt stark zu beeinträchtigen, soweit, dass auch eine Notkühlung nicht mehr aufrechterhalten werden kann.

### Darstellung der Erfindung

Der vorliegenden Erfindung liegt die Aufgabe zugrunde, bei einer Gasturbogruppe der eingangs genannten Art die Nachteile des Standes der Technik zu vermeiden.

Es gilt hierbei unter anderem, die Anordnung beweglicher Teile im Kühlluftpfad zu vermeiden. Es gilt weiterhin, das Kühlluftsystem so anzugeben, dass der der Kühlluft aufgeprägte Totaldruckerhöhung entweder inhärent sicher hergestellt ist, oder beim Ausfall der entsprechenden Mittel wenigstens eine ausreichende Notkühlung sichergestellt wird.

Erreicht wird dies durch die Gesamtheit der Merkmale des Anspruchs 1.

Kern der Erfindung ist es also, bei einer luftgekühlten Gasturbogruppe in den kühlluftführenden Kanälen Mittel zur Erhöhung des Totaldruckes vorzusehen, und damit bei gegebenem Kühlluft-Entnahmedruck und -Gegendruck den Kühlluftmassenstrom zu variieren, wobei diese Mittel keine bewegten Teile aufweisen. Dazu werden mit einem Treibmittel betreibbare Ejektoren in den Kühlluftkanälen angeordnet.

Damit lassen sich insbesondere bei der Kühlung der Brennkammer und der ersten Turbinenreihen die unumgänglichen Druckverluste der Kühlluft wenigstens im notwendigen Rahmen kompensieren. Ein weiterer, der Erfindung zugrundeliegender Gedanke ist der, bei stark gedrosselten Kühlluftleitungen, wobei auch die Filmkühlbohrungen im eigentlichen Sinne Drosselstellen darstellen, den effektiven Total-Vordruck der Kühlluft zu erhöhen. Eine weitere Option bei der Ausführung der Erfindung ist, auf eine interne Drosselung und Massenstromeinstellung der Kühlluft, wie sie häufig in Form von in den Kühlluftleitungen eingebauten Blenden implementiert wird, zu verzichten, und stattdessen die Kühlluftentnahme aus dem Verdichter bei niedrigerem Druck vorzunehmen, und den notwendigen Total-Vordruck durch eine Druckerhöhung in den Kühlluftkanälen einzustellen. Weiterhin ist die Erfindung auch besonders gut geeignet, um, bevorzugt in Abhängigkeit von geeigneten Prozesskennzahlen, den Kühlluftmassenstrom während des Betriebes zu variieren. Beispielsweise ist dies bei der Ausführungsform, bei der Ejektoren als Mittel zur Drukkerhöhung eingesetzt werden, vergleichsweise einfach möglich, indem nur auf den geringen Treibmittel-Massenstrom anstelle des gesamten Kühlluft-Massenstroms unmittelbar zugegriffen wird.

Neben dem Vorteil, nicht den gesamten Kühlluftmassenstrom einstellen zu müssen, und also auch nicht unmittelbar in das Hauptkühlsystem eingreifen zu müssen, ist eine bestehende Gasturbogruppe im Vergleich beispielsweise zu variablen Drosselstellen im Hauptkühlluftsystem vergleichsweise einfach auf den erfindungsgemässen Stand nachzurüsten.

Als Treibmittel für die Ejektoren kann erfindungsgemäss ein Treibgasmassenstrom, hier insbesondere ein Treibluftmassenstrom, eines höheren Druckes als dem des getriebenen Kühlluftmassenstromes verwendet werden. Dieser kann von einem extern angeordneten Verdichter stammen, kann aber auch besonders zweckmässig ein aus einer Verdichterstufe höheren Druckes abgezweigter Luftmassenstrom sein. Alternativ kann es sich als zweckmässig erweisen, einen Zusatzverdichter anzuordnen, der einen Teilstrom der vom Verdichter der Gasturbogruppe abgezweigten Kühlluft weiter verdichtet; dieser weiterverdichtete Teilstrom der Kühlluft wird dann als Treibmedium für den Ejektor verwendet.

Weiterhin kann erfindungsgemäss alternativ ein Dampfmassenstrom als Treibmittel verwendet werden, wobei dieser bevorzugt entsprechend überhitzt ist. Damit ist Kondensation in der Kühlluftleitung unter allen Umständen vermeidbar. Gegenüber der Zufuhr von Dampf als Kühlmittel, entweder für eine reine Dampfkühlung oder eine Dampf-Luft-Hybridkühlung, ist ein Vorteil, dass der qualitativ hochwertige und hochreine Dampf nur in vergleichsweise geringen Mengen benötigt wird. Diese Ausführungsform ist dann von Vorteil, wenn die Gasturbogruppe mit einem Abhitzedampferzeuger zum Betrieb in einer Kombianlage oder zur Gewinnung von Prozessdampf versehen ist. Weiterhin kann als Treibmittel zweckmässig auch Dampf verwendet werden, der, wie in der DE 100 41 413 in einem Kühlluftkühler, oder, wie in der EP 516 995, in einem Verdichter-Zwischenkühler erzeugt wurde.

Weiterhin ist das Kühlsystem bei zweckmässiger Auslegung nach wie vor inhärent sicher, da ein Minimum an Kühlluftströmung auch bei vollständigem Ausfall der Treibmittelversorgung, insbesondere einer Dampfversorgung, nach wie vor gewährleistet ist. Insgesamt bleibt in diesem Zusammenhang festzustellen, dass der Massenstrom des Treibmittels im Allgemeinen weniger als 20 %, bevorzugt weniger als 10 %, insbesondere auch weniger als 5 % des getriebenen Kühlluftmassenstroms beträgt, weshalb das Treibmittel an sich keine signifikante Wirkung als Kühlmittel aufweist.

Wie bereits angedeutet sind in einer bevorzugten Ausführungsform Mittel zur Einstellung des Treibmittelstroms in dessen Zuleitung zu einem Ejektor angeordnet.

Besonders geeignet ist die Erfindung in Verbindung mit einer Gasturbogruppe, welche mit Kühlsystemen unterschiedlicher Druckstufen versehen ist, beispielsweise einem Hochdruckkühlsystem und einem Niederdruckkühlsystem, wobei das Hochdruckkühlsystem von einer Verdichterendstufe und das Niederdruckkühlsystem von einer intermediären Verdichterstufe aus angespiesen wird. In einem solchen Falle ist eine bevorzugte Ausführungsform, im Niederdrucksystem Ejektoren anzuordnen, welche mit einem aus dem Hochdruckkühlsystem abgezweigten Treibmittel betrieben werden. Dies erweist sich gerade dann als vorteilhaft, wenn sich der Druckaufbau im Verdichter verschiebt, was insbesondere dann der Fall ist, wenn während der Verdichtung eine Kühlung stattfindet, beispielsweise im Falle einer Kühlung im Verdichter.

Insbesondere geeignet ist die erfindungsgemässe Ausführung einer Gasturbogruppe, wenn es sich um eine Gasturbogruppe mit sequentieller Verbrennung handelt, wobei eine erste Brennkammer und eine erste Turbine von einem Hochdruckkühlsystem, und eine zweite Brennkammer und eine zweite Turbine von einem Kühlsystem einer niedrigeren Druckstufe gekühlt werden.

### Kurze Beschreibung der Zeichnung

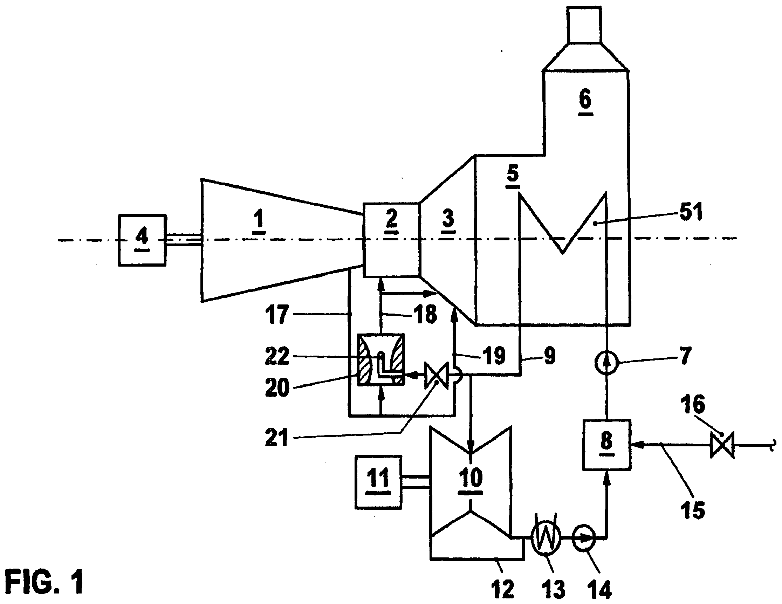

Die Erfindung wird nachfolgend anhand von in der Zeichnung illustrierten Beispielen näher erläutert. Die Figuren 1 bis 4 zeigen mögliche und vorteilhafte Ausführungsformen der Erfindung, welche keinesfalls abschliessend für die möglichen Ausführungsformen der in den Ansprüchen gekennzeichneten Erfindung zu verstehen sind. Für das Verständnis der Erfindung nicht notwendige Details sind weggelassen worden.

Die Ausführungsbeispiele und Figuren sind nur instruktiv zu verstehen, und sollen keineswegs der Einschränkung der in den Ansprüchen gekennzeichneten Erfindung dienen.

### Weg zur Ausführung der Erfindung

In dem in Figur 1 dargestellten Beispiel ist eine in einer Kombianlage integrierte Gasturbogruppe gemäss einer Ausführungsform der Erfindung ausgeführt. Ein Verdichter 1 verdichtet Luft auf einen Druck, und fördert diese in eine Brennkammer 2. In der Brennkammer wird ein Brennstoff in der verdichteten Luft verbrannt. Die entstehenden heissen Rauchgase durchströmen eine Turbine 3, wobei sie eine Leistung abgeben, welche zum Antrieb des Verdichters und eines externen Wellenleistungsverbrauchers, wie eines Generators 4, dient. Die entspannten Rauchgase, welche sich immer noch auf hoher Temperatur befinden, durchströmen einen Abhitzedampferzeuger 5, und erhitzen und verdampfen dort über Heizflächen 51 einen dort strömenden Speisewassermassenstrom, bevor sie über einen Kamin 6 in die Atmosphäre abströmen. Wasser-Dampf-seitig fördert eine Speisepumpe 7 einen Wassermassenstrom aus einem Behälter 8 in den Wärmetauscher 51, wo dieses Wasser verdampft und der entstehende Dampf überhitzt wird. Frischdampf 9 strömt zu einer zweiflutigen Dampfturbine 10, wo der Dampf entspannt wird. Die Dampfturbine treibt einen Generator 11 an. Der entspannte Dampf 12 strömt in einen Kondensator 13. Das verflüssigte Wasser wird über eine Kondensatpumpe 14 wieder in den Behälter 8 gefördert. Der Behälter 8 verfügt weiterhin über eine Zufuhrleitung für Zusatzwasser 15, um allfällige Verluste auszugleichen. Die Zusatzwasserzufuhr ist über ein Stellorgan 16 einstellbar. Dieser Wasser-Dampf-Kreislauf ist sehr vereinfacht dargestellt; der Fachmann kennt die möglichen Ausführungsformen, die aber im Einzelnen nicht erfindungsrelevant sind. Die Brennkammer 2 und die Turbine 3 der Gasturbogruppe sind hohen thermischen Belastungen ausgesetzt. Die Gasturbogruppe ist daher mit einem Kühlsystem 17 versehen, über welches Kühlluft von den Endstufen des Verdichters zu den thermisch hochbelasteten Komponenten der Gasturbogruppe strömt. Das Kühlluftsystem 17 verzweigt in einen ersten Ast 18, über den die Brennkammer und die erste Turbinenleitreihe oder die erste Turbinenstufe gekühlt werden, und einen zweiten Ast 19, über welchen Kühlluft zur zweiten und gegebenenfalls zur dritten Stufe der Turbine 3 strömt. Im zweiten Ast 19 ist das Druckgefälle über das Kühlluftsystem gross genug, um einen hinreichenden Kühlluftmassenstrom zu gewährleisten. Im ersten Ast 18 ist ein Ejektor 20 angeordnet. Über ein Stellorgan 21 ist ein Teilstrom des Frischdampfes 9 als Treibmittel dem Ejektor zuleitbar. Dieser strömt mit hoher Geschwindigkeit durch eine Düse aus, welche in etwa im engsten Querschnitt eines konvergent-divergenten Strömungsquerschnittes der Kühlluftleitung angeordnet ist. Stromab des Ejektors kommt es zu einer Totaldruckerhöhung der Kühlluft, wodurch der Kühlluftmassenstrom im ersten Ast 18 erhöht wird. Diese Ausführungsform der Erfindung lässt sich auch ohne den grossen apparativen Aufwand einer Kombischaltung realisieren, indem nur ein kleiner einfacher Dampferzeuger in den Abgastrakt einer Gasturbine eingebaut wird. Da die erforderlichen Drücke des Treibdampfes nicht zu hoch liegen, kann schon bei recht niedriger Dampftemperatur eine ausreichende Überhitzung des Dampfes erreicht werden. Daher kann die Erfindung, in Verbindung mit Dampf als Treibmedium, auch ohne einen Abhitzedampferzeuger realisiert werden, wenn, wie in der DE 100 41 413 vorgeschlagen, Kühlluftkühler als Dampferzeuger ausgeführt sind, oder wenn, wie die EP 515 995 vorschlägt, die in einem Zwischenkühler des Verdichters abzuführende Wärme zur Dampferzeugung genutzt wird. Insbesondere ist es bei der Integration in eine Kombianlage keineswegs notwendig, Frischdampf als Treibmedium für die Treibdüse des Ejektors zu verwenden; hier kann auch Anzapfdampf einer geeigneten Temperatur und eines geeigneten Druckes Verwendung finden.

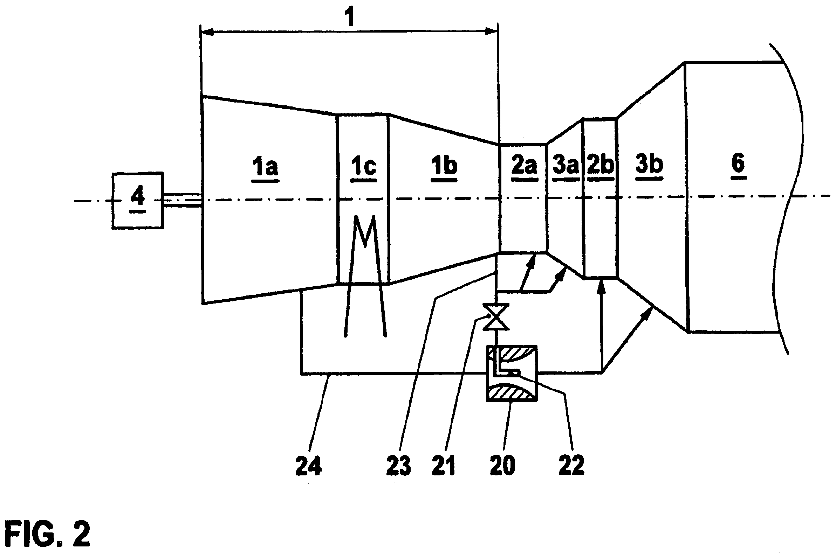

Fig. 2 zeigt eine Gasturbogruppe modernster Bauart mit sequentieller Verbrennung. Eine solche Gasturbogruppe ist aus der EP 620 362 bekanntgeworden. Ein Verdichter 1 verdichtet und fördert Luft auf einen hohen Druck in eine erste Brennkammer 2a, in der eine erste Brennstoffmenge verbrannt wird. Das gespannte Rauchgas wird in einer ersten Turbine, Hochdruckturbine, 3a teilentspannt, wobei typischerweise ein Druckverhältnis von 1,5 bis 2 erreicht wird, und strömt mit immer noch hoher Temperatur und hohem Druck in eine zweite Brennkammer 2b ein. Der Sauerstoffgehalt im Rauchgas nach der ersten Brennkammer ist immer noch vergleichsweise hoch, typischerweise bei 15% bis 17%. Daher kann in der zweiten Brennkammer 2b ohne weiteres zusätzlicher Brennstoff zugeführt und verbrannt werden. Das nacherhitzte Heissgas wird in einer Turbine 3b näherungsweise auf Umgebungsdruck entspannt, und strömt in den Abgastrakt 6 ab. Hier kann sich ohne weiteres auch ein nicht dargestellter Abhitzedampferzeuger befinden; Gasturbogruppen mit sequentieller Verbrennung eignen sich prinzipbedingt ganz besonders gut für Anwendungen in Kombianlagen. Bei der Entspannung in den Turbinen 3a und 3b geben die Rauchgase eine Leistung ab, die zum Antrieb des Verdichters 1 und eines Generators 4 dient. Aufgrund des hohen, in einer solchen Gasturbogruppe realisierten Druckverhältnisses ist das Kühlsystem zweiteilig ausgeführt, mit einem Hochdruckkühlsystem 23 und einem Niederdruckkühlsystem 24. Das Hochdruckkühlsystem zweigt Luft vom Verdichteraustritt ab, und verwendet diese zur Kühlung der ersten Brennkammer 2a und der Hochdruckturbine 3a. Das Niederdruckkühlsystem 24 zweigt Luft von einer intermediären Verdichterstufe ab, und verwendet diese zur Kühlung der zweiten Brennkammer 2b und der Niederdruckturbine 3b. Diese Zweiteilung des Kühlsystems ermöglicht es, den Hochdruckteil des Heissgaspfades mit Kühlluft eines hohen Druckes zu versorgen, und dabei eine verlustreiche starke Drosselung von Hochdruckkühlluft zur Kühlung der Niederdrucksektion des Heissgaspfades zu vermeiden. Selbstverständlich kann prinzipiell auch ein Kühlsystem mit mehr als zwei Druckstufen implementiert werden. Der Verdichter 1 ist in einen ersten Teilverdichter 1a und einen zweiten Teilverdichter 1 b unterteilt, zwischen denen ein Zwischenkühler 1 c angeordnet ist. Durch den Betrieb des Zwischenkühlers 1c wird die zum Antrieb des Verdichters notwendige Leistung reduziert, wodurch der Wirkungsgrad und die Nutzarbeit der Gasturbogruppe steigen. Dieser Effekt lässt sich auch durch eine Wassereinspritzung in den Verdichter oder eine Übersättigung der Ansaugluft mit Feuchte erreichen, was aufgrund der Verdunstung diese Feuchte eine intensive Innenkühlung des Verdichters bewirkt. Die Kühlung der Luft im Verdichter hat noch eine andere Wirkung: wie der Fachmann anhand einer einfachen Überlegung zur Stufenkinematik feststellt, wird beim Betrieb mit einer Zwischenkühlung im Verdichter der Druckaufbau in die hinteren Verdichterstufen verlagert. Während der relative Druckabbau über die Turbinenstufen in guter Näherung unverändert bleibt, verschiebt sich der Druckaufbau in den Verdichterstufen deutlich in den zweiten Teilverdichter 1 b. Daraus resultiert eine deutliche Verringerung der treibenden Druckdifferenz über das Niederdruckkühlsystem 24, und daraus eine Verminderung des Niederdruck-Kühlluftmassenstromes. Wird das NiederdruckKühlsystem 24 so dimensioniert, dass der Kühlluftmassenstrom beim Betrieb mit Kühlung im Verdichter ausreichend ist, führt dies beim Betrieb ohne Verdichterkühlung zur einer deutlichen Überkühlung des Niederdruck-Heissgaspfades, also der Baugruppen 2b und 3b, mit negativen Folgen für Leistung und Wirkungsgrad. Daher ist erfindungsgemäss ein Ejektor 20 im Niederdruckkühlsystem angeordnet, dessen Treibdüse 22 über ein Stellorgan 21 mit dem Hochdruckkühlsystem verbunden ist. In einem ersten Betriebsbereich, ohne Verdichterkühlung, ist das Stellorgan 21 geschlossen oder nur wenig geöffnet; das Niederdruckkühlsystem ist dann für einen eben ausreichenden Kühlluftmassenstrom ausgelegt. Im einem Betrieb mit Verdichterkühlung wird das Stellorgan 21 geöffnet, und die mit hoher Geschwindigkeit aus der Treibdüse austretende Hochdruckkühlluft verändert die Druckverhältnisse im Niederdruckkühlsystem derart, dass ein ausreichender Kühlluftmassenstrom gewährleistet ist. In gewisser Weise wirkt dieses System sogar selbstregelnd: In dem Masse, in dem der Druckaufbau in den zweiten Teilverdichter 1 b verlagert wird, steigt das für die Treibmittelströmung des Ejektors zur Verfügung stehende Druckgefälle an, wodurch die Wirkung des Antriebs im Niederdruckkühlsystem selbsttätig unterstützt wird. Bei entsprechender Auslegung des Systems wäre es daher prinzipiell denkbar, das Stellorgan 21 durch eine feste Drosselstelle zur Einstellung des Durchflusses zu ersetzen, und auf externe Eingriffe auf die Treibmittelströmung zu verzichten. Ähnlich wie eine Zwischenkühlung kann auch die Verstellung mehrerer Leitreihen eine Verschiebung des Druckaufbaus im Verdichter bewirken, was in Bezug auf die Kühlluftmassenströme ebenfalls durch den Einsatz von eine Druckerhöhung bewirkenden Mitteln in den Kühlluftkanälen kompensiert werden kann.

Die in Figur 2 dargestellte Ausführungsform ist als inhärent sicher zu bezeichnen. Beim Betrieb der Gasturbogruppe steht automatisch auch des Treibmittel für den Ejektor zur Verfügung. Bei der in Figur 1 dargestellten Ausführungsform besteht zwar die Möglichkeit, dass bei einem Ausfall der Speisepumpe 7 das Treibmedium ausfällt; in der Praxis würde dies aber bedeuten, dass die Heizflächen 51 des Abhitzedampferzeugers 5 trokkenfallen würden, so, dass in diesem Falle die gesamte Anlage ausser Betrieb genommen werden muss. Insofern kann auch hier der Druckerhöhung der Kühlluft als inhärent sicher bezeichnet werden.

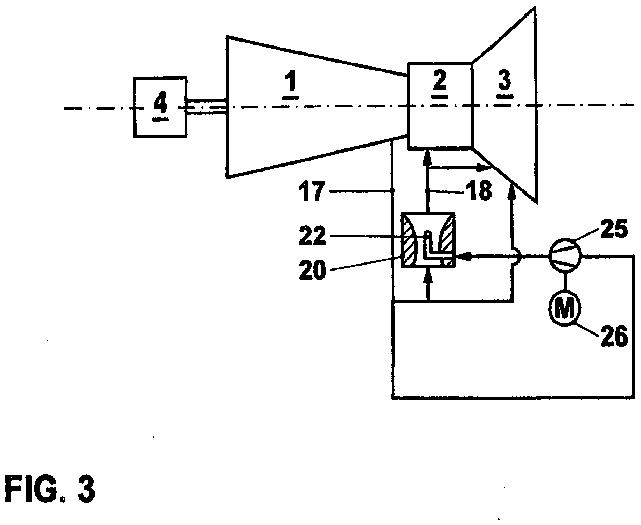

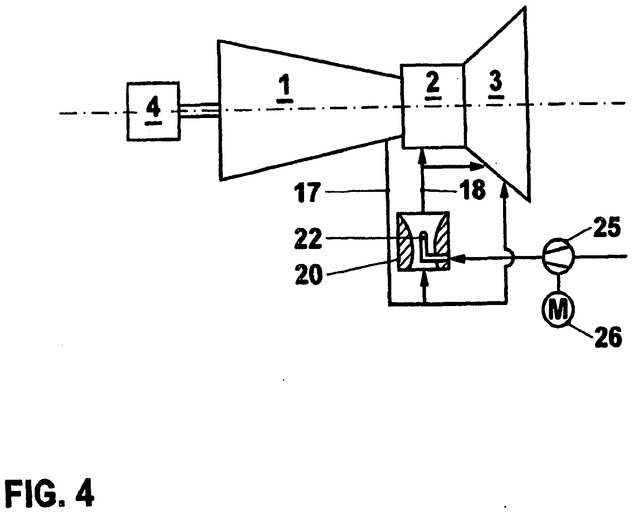

Demgegenüber zeigen die Figuren 3 und 4 zwei Ausführungsformen der Erfindung, welche zwar keine inhärente Sicherheit der Kühlluft-Druckerhöhung aufweisen, aber besonders einfach an bestehenden Anlagen nachzurüsten sind, und auch beim Ausfall der Systeme zur Totaldruckerhöhung der Kühlluft eine Mindestkühlung gewährleisten. Gemäss der Ausführungsform in Figur 3 wird stromauf des Ejektors 20 ein Teil der Kühlluft 17 abgezweigt und von einem Zusatzverdichter 25 auf einen höheren Totaldruck gefördert als der Verdichter 1 zur Verfügung zu stellen vermag. Dieser nachverdichtete Teilstrom wird als Treibmittel für die Treibdüse 22 des Ejektors verwendet. Der Zusatzverdichter 25 wird von einem drehzahlvariablen Motor 26 angetrieben, dessen Drehzahlregelung eine Regelung der zu erzielenden Druckerhöhung im Kühlluftsystem ermöglicht. Figur 4 zeigt, dass der Zusatzverdichter 25 beispielsweise auch Umgebungsluft fördern könnte; selbstverständlich wäre es auch möglich, die Treibdüse 22 des Ejektors 20 an ein beliebiges externes Druckgassystem anzuschliessen. Selbst beim Ausfall solcher aktiver extemer Systeme wird der Hauptkühlluftpfad nicht in Mitleidenschaft gezogen. Lediglich die Erhöhung des Kühlluft-Totaldrukkes entfällt und damit sinkt der Kühlluftmassenstrom. Gleichwohl wird weiterhin eine mindesterforderliche Kühlluftströmung aufrechterhalten, und die Gasturbogruppe kann, wenn auch möglicherweise mit verminderter Leistung, bedenkenlos weiter betrieben werden.

Weiterhin ermöglicht es die Erfindung auch, die Kühlluftmenge beispielsweise in Abhängigkeit von der Heissgastemperatur im Bereich der zu kühlenden Komponenten auf ein zur Betriebssicherheit notwendiges Minimum zu reduzieren, und bei hoher Gasturbinenlast entsprechend anzuheben.

Selbstverständlich kann auch eine Gasturbogruppe mit nur eine Brennkammer und nur einer Turbine mit einem oben dargestellten Kühlsystem mit zwei oder mehr Druckstufen ausgestattet werden.

Die Erfindung kann ohne Weiteres mit anderen üblichen Massnahmen, wie der dem Fachmann geläufigen Anordnung von Kühlluftkühlern, kombiniert werden.

Die Treibdüse des Ejektors kann, wenn der Vordruck des Treibmittels dies erlaubt, insbesondere auch überkritisch betrieben werden, dergestalt, dass die Ausströmung aus der Treibdüse mit Überschallgeschwindigkeit erfolgt. Die Verzögerung der Treibmittelströmung erfolgt dann über ein Stosssystem, was bei entsprechender Konturierung des Strömungskanals zu einer sehr effizienten Wirkung beizutragen vermag.

Prinzipiell können auch andere Mittel, wie beispielsweise ein Druckwellengenerator, auf geeignete Weise als Mittel zur Druckerhöhung der Kühlluft Anwendung finden.

Im Lichte der vorstehenden Ausführungen eröffnet sich dem Fachmann eine Vielzahl möglicher Ausführungsformen der in den Ansprüchen gekennzeichneten Erfindung.

### Bezugszeichenliste

- 1: Verdichter
- 1a: Teilverdichter, Niederdruckverdichter
- 1b: Teilverdichter, Hochdruckverdichter
- 1c: Zwischenkühler
- 2: Brennkammer
- 2a: erste Brennkammer, Hochdruckbrennkammer
- 2b: zweite Brennkammer, Niederdruckbrennkammer
- 3: Turbine
- 3a: erste Turbine, Hochdruckturbine
- 3b: zweite Turbine, Niederdruckturbine
- 4: Generator
- 5: Abhitzedampferzeuger
- 6: Abgastrakt, Kamin
- 7: Kesselspeisepumpe
- 8: Speisewasserbehälter
- 9: Frischdampf
- 10: Dampfturbine
- 11: Generator
- 12: entspannter Dampf
- 13: Kondensator
- 14: Kondensatpumpe
- 15: Zusatzwasser
- 16: Stellorgan, für Zusatzwasser
- 17: Kühlsystem
- 18: erster Ast eines Kühlsystems
- 19: zweiter Ast eines Kühlsystems
- 20: Ejektor
- 21: Stellorgan, für Treibmittel des Ejektors
- 22: Treibdüse
- 23: Hochdruckkühlsystem
- 24: Niederdruckkühlsystem
- 25: Zusatzverdichter
- 26: Antriebsmotor für Zusatzverdichter
- 51: Heizflächen

## Patentansprüche

1. Gasturbogruppe , mit einem Kühlluftsystem (17; 23, 24), über welches im Betrieb wenigstens ein getriebener Kühlluftmassenstrom von einem Verdichter (1; 1a;) zu thermisch hochbelasteten Komponenten (2, 3; 2a, 2b, 3a, 3b) der Gasturbogruppe strömt, **dadurch gekennzeichnet, dass** in wenigstens einer Kühlluftleitung des Kühlluftsystems mit einem Treibmittel betreibbare Ejektoren (20) zur Totaldruckerhöhung der vom Verdichter (1; 1a) strömenden Kühlluft angeordnet sind, welche Ejektoren Treibdüsen für das Treibmittel und einen konvergent-divergenten Strömungsquerschnitt für die Kühlluft umfassen und dass das Treibmittel ein Dampfmassenstrom (9) ist oder ein Treibgasmassenstrom eines höheren Totaldrucks als desjenigen des getriebenen Kühlluftmassenstroms in der Kühlluftleitung ist.

2. Gasturbogruppe nach Anspruch 1, **dadurch gekennzeichnet, dass** der Massenstrom des Treibmittels weniger als 20 %, bevorzugt weniger als 10%, insbesondere weniger als 5% des getriebenen Massenstroms beträgt.

3. Gasturbogruppe nach Anspruch 1 oder 2, **dadurch gekennzeichnet, dass** in einer Zuleitung für das Treibmittel Mittel (21) zur Einstellung des Treibmittelmassenstroms angeordnet sind.

4. Gasturbogruppe nach einem der vorstehenden Ansprüche, **dadurch gekennzeichnet, dass** die Gasturbogruppe mit einem Hochdruckkühlsystem (23) und einem Niederdruckkühlsystem (24) ausgestattet ist, wobei das Hochdruckkühlsystem von einer der Endstufen (1 b) des Verdichters aus angespiessen wird, und das Niederdruckkühlsystem von einer intermediären Stufe (1a) des Verdichters aus angespiessen wird.

5. Gasturbogruppe nach Anspruch 4, **dadurch gekennzeichnet, dass** im Niederdruckkühlsystem (24) ein Ejektor (20) angeordnet ist, der mit einem Teilstrom der Kühlluft aus dem Hochdruckkühlsystem (23) als Treibmedium betreibbar ist.

6. Gasturbogruppe nach einem der Ansprüche 1 oder 5, **dadurch gekennzeichnet, dass** das Hochdruckkühlsystem (23) mit einer ersten Brennkammer (2a) und einer ersten Turbine (2b) einer Gasturbogruppe mit sequentieller Verbrennung in Verbindung steht, und das Niederdruckkühlsystem (21) mit einer zweiten Brennkammer (2b) und einer zweiten Turbine (3b) der Gasturbogruppe in Verbindung steht.

## Claims

1. Gas turbine group with a cooling air system (17; 23, 24) via which in operation at least one impelled cooling air mass flow flows from a compressor (1; 1a) to thermally heavily loaded components (2, 3; 2a, 2b, 3a, 3b) of the gas turbine group, **characterised in that** ejectors (20) which can be operated with an impelling agent are arranged in at least one cooling air line of the cooling air system to increase the total pressure of the cooling air flowing from the compressor (1; 1a), which ejectors have impelling nozzles for the impelling agent and a convergent-divergent flow cross-section for the cooling air, and the impelling agent is a steam mass flow (9) or an impelling gas mass flow of a higher total pressure than that of the impelled cooling air mass flow in the cooling air line.

2. Gas turbine group according to claim 1, **characterised in that** the mass flow of impelling agent amounts to less than 20%, preferably less than 10%, in particular less than 5% of the impelled mass flow.

3. The gas turbine group according to claim 1 or 2, **characterised in that** means (21) for adjusting the impelling agent mass flow are arranged in a supply line for the impelling agent.

4. Gas turbine group according to any of the preceding claims, **characterised in that** the gas turbine group is equipped with a high-pressure cooling system (23) and a low-pressure cooling system (24), wherein the high-pressure cooling system is fed from one of the final stages (1b) of the compressor, and the low-pressure cooling system is fed from an intermediate stage (1a) of the compressor.

5. Gas turbine group according to claim 4, **characterised in that** an ejector (20) is arranged in the low-pressure cooling system (24) which can be operated with a part flow of cooling air from the high-pressure cooling system (23) as an impelling agent.

6. Gas turbine group according to one of claims 4 5, **characterised in that** the high-pressure cooling system (23) is connected to a first combustion chamber (2a) and a first turbine (2b) of a gas turbine group with sequential combustion, and the low-pressure cooling system (24) is connected to a second combustion chamber (2b) and a second turbine (3b) of the gas turbine group.

## Revendications

1. Groupe de turbines à gaz, avec un système de refroidissement à air (17 ; 23, 24), au moyen duquel, pendant le fonctionnement, au moins un flux massique d'air de refroidissement s'écoule d'un compresseur (1 ; 1a) vers des composants sollicités thermiquement (2, 3 ; 2a, 2b, 3a, 3b) du groupe de turbines à gaz, **caractérisé en ce que**, dans au moins une conduite d'air de refroidissement du système de refroidissement à air, sont disposés des éjecteurs (20) pouvant être actionnés par un propulseur, pour l'augmentation de la pression totale de l'air de refroidissement s'écoulant à partir du compresseur (1 ; 1a), ces éjecteurs comprenant des buses de propulsion pour le propulseur et présentant une section d'écoulement convergente-divergente pour l'air de refroidissement et **en ce que** le propulseur est un flux massique de vapeur (9) ou un flux massique de gaz propulseur d'une pression totale supérieure à celle du flux massique d'air de refroidissement propulsé dans la conduite d'air de refroidissement.

2. Groupe de turbines à gaz selon la revendication 1, **caractérisé en ce que** le flux massique du propulseur est inférieur à 20 %, de préférence inférieur à 10 %, plus particulièrement inférieur à 5 % du flux massique propulsé.

3. Groupe de turbines à gaz selon la revendication 1 ou 2, **caractérisé en ce que**, dans une conduite d'alimentation pour le propulseur, sont disposés des moyens (21) pour le réglage du flux massique de propulseur.

4. Groupe de turbines à gaz selon l'une des revendications précédentes, **caractérisé en ce que** le groupe de turbines à gaz est muni d'un système de refroidissement à haute pression (23) et d'un système de refroidissement à basse pression (24), le système de refroidissement à haute pression étant alimenté à partir d'un des étages finaux (1b) du compresseur, et le système de refroidissement à basse pression est alimenté à partir d'un étage intermédiaire (1a) du compresseur.

5. Groupe de turbines à gaz selon la revendication 4, **caractérisé en ce que**, dans le système de refroidissement à basse pression (24), est disposé un éjecteur (20) qui peut être actionné avec un flux partiel de l'air de refroidissement provenant du système de refroidissement à haute pression (23) en tant que propulseur.

6. Groupe de turbines à gaz selon l'une des revendications 4 ou 5, **caractérisé en ce que** le système de refroidissement à haute pression (23) est relié avec une première chambre de combustion (2a) et une première turbine (2b) d'un groupe de turbines à gaz avec une combustion séquentielle et le système de refroidissement à basse pression (24) est relié avec une deuxième chambre de combustion (2b) et une deuxième turbine (3b) du groupe de turbines à gaz.
